# FASCICULE DE BREVET EUROPEEN

(11) **EP 1 697 171 B1**
(45) Date de publication et mention de la délivrance du brevet: **27.08.2008**
(21) Numéro de dépôt: 04817580.6
(22) Date de dépôt: 22.12.2004
(51) Int. Cl.: B60R 11/00

(54) **ENSEMBLE DE CONSOLE EXTRACTIBLE A MOYENS DE BLOCAGE EN COULISSEMENT ET VEHICULE AUTOMBILE CORRESPONDANT**
HERAUSZIEHBARE KONSOLENANORDNUNG MIT SCHIEBEVERRIEGELUNGSMITTEL UND ENTSPRECHENDES KRAFTFAHRZEUG
EXTRACTABLE CONSOLE ASSEMBLY WITH SLIDING LOCKING MEANS AND CORRESPONDING MOTOR VEHICLE

(30) Priorité: 24.12.2003 FR 0315406
(43) Date de publication de la demande: 06.09.2006
(73) Titulaire: Peugeot Citroën Automobiles S.A., 78140 Vélizy Villacoublay (FR); Faurecia Interieur Industrie, 92000 Nanterre (FR)
(72) Inventeur: BARRE, Philippe, F-94340 JOINVILLE LE PONT (FR); NEGRE, David, F-25230 SELONCOURT (FR)
(74) Mandataire: Domenego, Bertrand
(86) Numéro de dépôt international: PCT/FR2004/003351
(87) Numéro de publication internationale: WO 2005/063528

(56) Documents cités:
- WO-A-98/08720
- US-A- 5 484 240
- US-A1- 2002 139 824

## Description

La présente invention concerne un ensemble de console pour véhicule automobile du type comprenant :
- une base et une console qui comprennent au moins un rail et au moins un galet de roulement sur le rail pour permettre à la console de coulisser par rapport à la base le long d'une direction de coulissement,
- des moyens libérables de liaison de la console à la base pour permettre son extraction du véhicule automobile,
- des moyens de blocage de la console par rapport à la base le long de la direction de coulissement.

Le document US 2002/0139 824 A1 décrit par example un ensemble de ce type. L'invention s'applique en particulier à un ensemble central de console prévu entre des sièges droits et gauches d'un véhicule automobile.

On connaît un ensemble du type précité. La base y comprend un rail solidaire du plancher. Les galets sont portés par la console. Les moyens libérables de liaison de la console à la base comprennent des crochets s'engageant sous les bords latéraux du rail. Les crochets peuvent pivoter sous l'action d'une poignée pour permettre de libérer la console du rail et ainsi l'extraire du véhicule.

Grâce à cette possibilité d'extraction, on peut moduler l'aménagement intérieur du véhicule automobile, et par exemple libérer de la place à l'intérieur de l'habitacle.

Toutefois, ces moyens libérables de liaison ont une structure complexe et un encombrement important.

Les crochets, lorsqu'ils sont engagés sous les bords latéraux du rail, empêchent également par frottement le coulissement de la console par rapport à la base. Ce blocage est satisfaisant dans les situations normales.

Toutefois, lors d'un choc, la console subit une accélération importante vers l'avant ou vers l'arrière du véhicule, et les moyens de blocage constitués par les crochets ne s'avèrent pas suffisants pour bloquer la console.

Ainsi, la console peut blesser un occupant du véhicule.

Un but de l'invention est de résoudre ces problèmes en fournissant un ensemble de console du type précité dont les moyens libérables de liaison soient de structure plus simple et d'encombrement plus réduit, et qui permette, grâce à des moyens de blocage d'encombrement réduit, de limiter les risques de blessure d'un occupant du véhicule en cas de choc.

A cet effet, l'invention a pour objet un ensemble de console du type précité, caractérisé en ce que les moyens libérables de liaison comprennent des reliefs complémentaires prévus sur le rail et le galet, en ce qu'un premier élément parmi le rail et le galet comprend au moins une partie mobile entre une position de liaison dans laquelle les reliefs complémentaires sont engagés l'un dans l'autre, et une position d'extraction dans laquelle les reliefs complémentaires sont dégagés l'un de l'autre, en ce que les moyens de blocage comprennent au moins un logement et au moins un doigt mobile entre une position de blocage, dans laquelle le doigt est engagé dans le logement, et une position de libération, dans laquelle le doigt est dégagé du logement, et en ce que le logement a une étendue, le long de la direction de coulissement, supérieure à celle du doigt.

Selon des modes particuliers de réalisation, l'ensemble peut comprendre l'une ou plusieurs des caractéristiques suivantes, prise(s) isolément ou selon toutes les combinaisons techniquement possibles :
- le premier élément est le rail,
- la partie mobile est formée par un tronçon du rail,
- tout le rail est mobile entre la position de liaison et la position d'extraction,
- le relief du premier élément est convexe,
- la partie mobile du premier élément est mobile par rotation autour d'un axe de rotation,
- le relief du premier élément a un profil convexe sensiblement en arc de cercle centré sur l'axe de rotation,
- la console ou la base présente un logement de réception du relief du premier élément lorsque la partie mobile est en position d'extraction,
- le logement a sensiblement une forme complémentaire de celle du relief du premier élément pour retenir la console par rapport à la base latéralement par rapport à la direction de coulissement,
- les moyens de blocage comprennent au moins deux doigts mobiles, chaque doigt étant mobile entre une position de blocage, dans laquelle il est engagé dans le logement, et une position de libération, dans laquelle il est dégagé du logement, et les deux doigts peuvent être simultanément en position de blocage et engagés dans le même logement,
- un premier doigt est disposé dans sa position de blocage sensiblement contre une première extrémité du logement, et un deuxième doigt est disposé dans sa position de blocage sensiblement contre une deuxième extrémité du logement opposée à la première extrémité,
- l'ensemble comprend des moyens de rappel du ou de chaque doigt vers sa position de blocage,
- l'ensemble comprend des premiers moyens de rappel d'un premier doigt vers sa position de blocage et des deuxièmes moyens de rappel d'un deuxième doigt vers sa position de blocage, les premiers moyens de rappel étant indépendants des deuxième moyens de rappel,
- l'ensemble comprend des moyens de manoeuvre du ou de chaque doigt pour l'amener vers sa position de libération,
- les moyens de manoeuvre sont des moyens communs de manoeuvre pour dégager les doigts simultanément du logement,
- le ou chaque doigt est porté par la console et le ou chaque logement est prévu dans la base, et
- les moyens de blocage comprennent plusieurs logements répartis le long de la direction de coulissement.

L'invention a également pour objet un véhicule automobile, caractérisé en ce qu'il comprend au moins un ensemble de console tel que défini ci-dessus, la base étant solidaire du plancher du véhicule automobile.

L'invention sera mieux comprise à la lecture de la description qui va suivre, donnée uniquement à titre d'exemple, et faite en se référant aux dessins annexés, sur lesquels :
- la figure 1 est une vue partielle, schématique et en perspective de l'habitacle d'un véhicule automobile selon l'invention,
- la figure 2 est une vue schématique, partielle, agrandie et en coupe transversale prise selon le plan II-II de la figure 1, cette figure illustrant le rail gauche et un galet de l'ensemble de console du véhicule de la figure 1 avec la console en position extrême reculée,
- les figures 3 et 4 sont des vues analogues à la figure 2 illustrant deux étapes successives de l'extraction de la console,
- la figure 5 est une vue schématique, partielle, latérale et en coupe illustrant les moyens de blocage de la console du véhicule de la figure 1 en position de blocage, la console étant alors dans une position avancée,
- la figure 6 est une section schématique, partielle, et en coupe prise suivant la ligne VI-VI de la figure 5,
- la figure 7 est une vue analogue à la figure 5 illustrant les moyens de blocage en position de libération,
- la figure 8 est une vue analogue à la figure 5 illustrant le comportement des moyens de blocage en cas de choc,
- les figures 9 et 10 sont des vues schématiques, partielles et de face, illustrant la liaison de la poignée de commande et de la tige de manoeuvre des moyens de blocage, respectivement en position de blocage et en position de libération, et
- les figures 11 et 12 sont des vues partielles analogues à la figure 1 et illustrant deux variantes de l'ensemble de console de la figure 1.

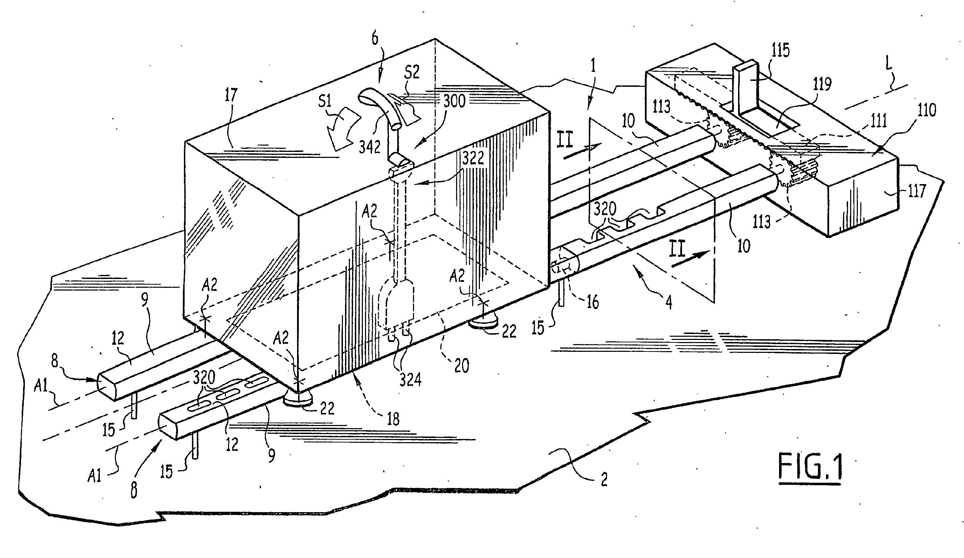

La figure 1 illustre schématiquement une partie de l'habitacle d'un véhicule automobile. On y distingue notamment un ensemble 1 de console et le plancher 2 du véhicule automobile.

L'ensemble 1 de console comprend une base 4 et une console 6.

La base 4 comprend deux rails 8 qui s'étendent parallèlement à la direction longitudinale L du véhicule automobile et sont espacés latéralement l'un de l'autre.

On notera que les termes « avant », « arrière », « droite » et « gauche » utilisés par la suite s'entendent par rapport à la position d'un conducteur du véhicule et au sens de marche du véhicule. L'avant est situé vers la gauche sur la figure 1.

### Structure des moyens de liaison et d'extraction de la console

Les rails 8 comprennent des tronçons avant 9 fixes et des tronçons arrière 10 rotatifs sous l'action des moyens 110 d'entraînement en rotation qui font partie de la base 4.

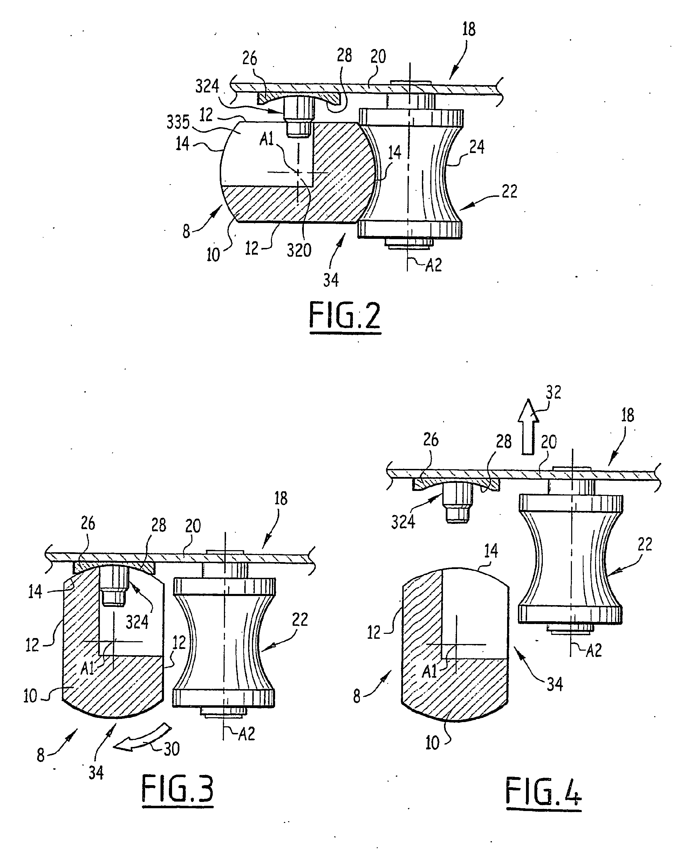

Les rails 8 ont une section transversale circulaire tronquée par deux méplats 12. Cela est particulièrement visible sur la figure 2 où seul le rail 8 gauche a été représenté.

Pour chaque rail 8, les méplats 12 sont parallèles entre-eux. Les méplats 12 sont reliés par deux régions convexes 14 de section transversale en arc de cercle.

Les tronçons avant 9 des rails 8 sont fixés sur le plancher 2, par exemple par l'intermédiaire de vis 15.

Les moyens 110 d'entraînement en rotation comprennent une crémaillère 111 qui s'étend transversalement et deux pignons 113 qui engrènent avec la crémaillère. Chacun des pignons 113 est solidaire de l'extrémité arrière d'un tronçon arrière 10 d'un rail 8. Les moyens 110 d'entraînement comprennent en outre une manette 115 de déplacement manuel de la crémaillère 111. Les moyens 110 d'entraînement comprennent également un boîtier 117 qui renferme la crémaillère 111 et les pignons 113, et dans lequel la crémaillère est mobile transversalement en translation sous l'action de la manette 115. La manette 115 fait saillie à l'extérieur du boîtier 117 par l'intermédiaire d'une ouverture supérieure 119 ménagée dans ce dernier.

Les extrémités avant des tronçons arrière 10 des rails 8 sont montées à rotation sur les tronçons avant 9 par l'intermédiaire de pivots 16.

Ainsi, chaque tronçon arrière 10 est mobile en rotation autour de l'axe longitudinal et horizontal A1 du rail 8 correspondant entre deux positions.

Une première de ces positions, dite de liaison, est illustrée par les figures 1 et 2. Les méplats 12 du tronçon 10 considéré sont alors sensiblement horizontaux.

La seconde position, dite d'extraction, est illustrée par les figures 3 et 4. Dans cette seconde position, le tronçon 10 considéré a pivoté de 90° autour de son axe longitudinal A1 de sorte que les méplats 12 sont alors verticaux.

Comme on le voit sur la figure 1, la console 6 comprend de manière classique un corps 17 offrant plusieurs boîtiers et logements de réception d'objets qui n'ont pas été représentés.

La console 6 comprend en outre sous le corps 17, et solidaire de ce dernier, un chariot 18 représenté en pointillés sur la figure 1.

Ce chariot 18 comprend une platine 20, par exemple de contour extérieur sensiblement rectangulaire, supportant quatre galets 22 disposés chacun à un coin de la platine 20.

Les galets 22 ont sensiblement une forme de diabolo et sont sensiblement de révolution autour de leurs axes A2 verticaux.

Ainsi, chaque galet 22 comprend une région centrale concave 24 dont le profil longitudinal, c'est-à-dire dans un plan passant par l'axe longitudinal A2, est en arc de cercle sensiblement de même rayon que les régions convexes 14 des rails 8.

Les galets 22 sont montés à rotation sous la platine 20 pour pouvoir tourner autour de leurs axes longitudinaux A2 et ainsi rouler sur les rails 8, comme cela sera décrit par la suite.

La platine 20 porte également sous sa surface inférieure deux baguettes 26 de positionnement. La baguette 26 gauche, visible sur la figure 2, est disposée à droite des galets 22 gauches, et la baguette 26 droite est disposée à gauche des galets 22 droits.

Chaque baguette 26 présente une cavité inférieure 28 s'étendant longitudinalement et présentant une section transversale en arc de cercle de rayon correspondant sensiblement à celui des régions convexes 14 des rails 8.

Comme on le voit sur les figures 1 et 2, les galets 22 sont disposés de part et d'autre des rails 8 pour que les galets 22 droits puissent rouler sur la région convexe 14 droite du rail 8 droit et que les galets 22 gauche puissent rouler sur la région convexe 14 gauche du rail 8 gauche.

Ainsi, la console 6 peut coulisser par rapport à la base 4 le long de la direction longitudinale L par roulement des galets 22 sur les rails 8 entre une position extrême avancée et une position extrême reculée, dans laquelle la console 6 est située uniquement au-dessus des tronçons arrière 10 des rails 8. Sur la figure 1, la console 6 occupe une position longitudinale intermédiaire entre ces deux positions extrêmes. Sur la figure 2, la console 6 est en position extrême reculée.

Pour bloquer la console 6 dans les positions extrêmes ou dans des positions intermédiaires, l'ensemble 1 comprend des moyens 300 de blocage longitudinal de la console 6.

### Structure des moyens de blocage longitudinal de la console

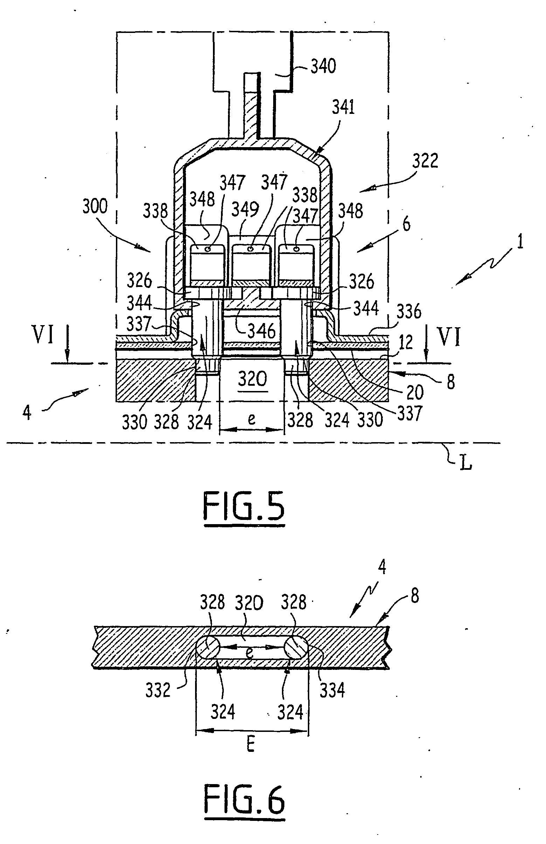

Les moyens 300 de blocage sont illustrés plus particulièrement par les figures 1 et 5 à 10. Sur les figures 5 à 10, la console 6 occupe la même position longitudinale que sur la figure 1.

Les moyens 300 de blocage comprennent une série de logements 320 espacés longitudinalement les uns des autres le long du rail 8 gauche et un mécanisme 322 prévu sur la console 6.

Ce mécanisme 322 comprend deux doigts 324 qui sont espacés longitudinalement l'un de l'autre d'une distance e.

Ces doigts 324 ont une forme de cheville munie d'une tête supérieure élargie 326 et dont la tige comprend une extrémité inférieure 328 de diamètre réduit reliée au reste de la tige par une région tronconique 330 convergeant vers le bas.

On notera que la distance e est mesurée entre les extrémités 328 des doigts 324.

Chaque doigt 324 a sensiblement une forme de révolution autour d'un axe vertical.

Comme illustré par la figure 6 où un seul logement 320 du tronçon avant 9 du rail 8 gauche est représenté, chaque logement 320 est constitué par une ouverture ménagée dans le méplat supérieur 12 du rail 8. Cette ouverture a une forme oblongue à bord avant 332 et à bord arrière 334 en formes de demi-cercles de diamètre correspondant à celui des extrémités inférieures 328 des doigts 324.

Chaque logement 320 a une étendue longitudinale E notablement supérieure à celle d'un seul doigt 324 et sensiblement égale à celle des extrémités inférieures 328 des deux doigts 324 plus leur espacement longitudinal e.

Les logements 320 du tronçon arrière 10 gauche débouchent latéralement dans la région convexe 14 droite via des dégagements 335 visibles sur les figures 1 à 4.

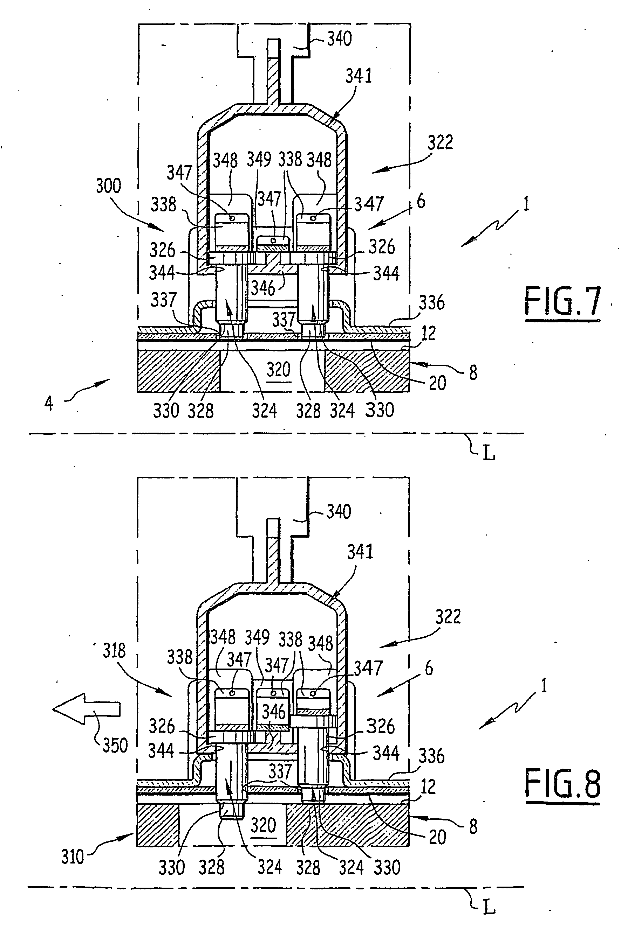

Chaque doigt 324 est mobile indépendamment par translation verticale entre une position extraite de blocage longitudinal de la console 6, illustrée par la figure 5, et une position rétractée de libération longitudinale de la console 6, illustrée par la figure 7.

Dans sa position de blocage, l'extrémité inférieure 328 du doigt 324 fait saillie vers le bas au travers du fond 336 de la console 6 puis de la platine 20 du chariot 18 par l'intermédiaire d'une ouverture 337. L'extrémité 328 du doigt 324 s'étend alors dans un logement 320.

Comme on le voit sur les figures 5 et 6, lorsque les deux doigts 324 sont simultanément en positions de blocage, ils sont engagés ensemble dans un même logement 320.

L'extrémité 328 du doigt 324 avant prend alors appui sur le bord avant 332 du logement 320 et l'extrémité 328 du doigt 324 arrière prend appui sur le bord arrière 334 du logement 320.

Les régions tronconiques 330 des doigts 324 peuvent pénétrer légèrement dans le logement 320 pour prendre appui longitudinalement sur les bords avant 332 et arrière 334 et ainsi rattraper les jeux longitudinaux.

Ainsi, lorsque les doigts 324 sont simultanément en positions de blocage, la console 6 est bloquée fermement longitudinalement par rapport à sa base 4.

Dans leurs positions de libération de la figure 7, les doigts 324 sont rétractés dans la console 6 de sorte qu'ils sont éloignés du rail 8 gauche et dégagés de ses logements 320.

Le mécanisme 322 comprend des ressorts 338 de rappel des doigts 324 vers leurs positions de blocage. Ces ressorts 338 sont par exemple des lames élastiques. Une lame élastique 338 individuelle est associée à chaque doigt 324 pour le rappeler vers sa position de blocage, indépendamment de l'autre doigt 324. L'extrémité inférieure de chaque lame 338 s'appuie sur la tête 326 du doigt 324 correspondant.

Le mécanisme 322 comprend également une tige 340 de manoeuvre des doigts 324, prolongée à son extrémité inférieure par un étrier 341 et reliée par son extrémité supérieure à une poignée de commande 342 supérieure (fig. 1).

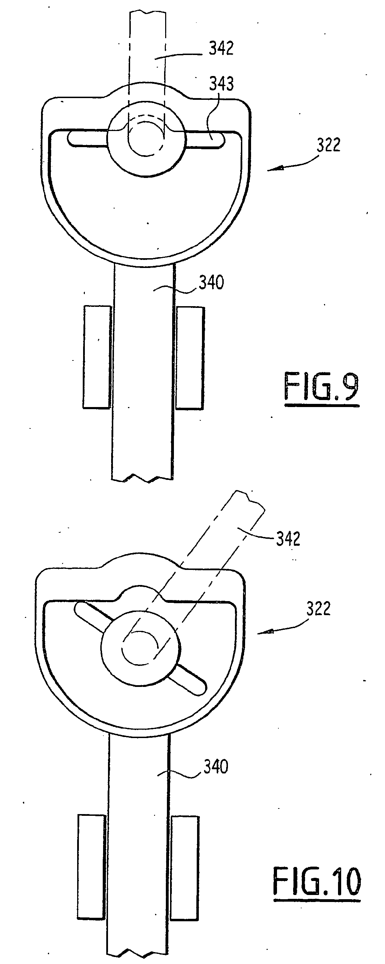

Plus précisément, la poignée 342 est montée rotative sur la console 6 et elle comprend une came 343 (figure 9) reçue dans l'extrémité supérieure de la tige 340 qui forme suiveur de came pour transformer un mouvement de rotation de la poignée 342 en une translation verticale de la tige 340.

En revenant à la figure 5, on peut constater que des orifices 344 de passage des tiges des doigts 324 sont ménagés dans la base 346 de l'étrier 341. Les extrémités supérieures des deux lames élastiques 338 de rappel des doigts 324 sont fixées par exemple par des vis 347 sur des voiles 348 s'étendant entre la base 346 et les ailes de l'étrier 341.

La tige 340 est mobile verticalement, sous l'action de la poignée 342, entre une position de blocage longitudinal de la console 6, illustrée par les figures 5 et 9, et une position de libération longitudinale de la console 6, illustrée par les figures 7 et 10.

Sur la figure 5, la tige 340, et donc la base 346 de l'étrier 341, occupent une position extrême inférieure permettant aux doigts 324 d'occuper leurs positions de blocage décrites précédemment. Si dans cette position, un doigt 324 est soulevé vers sa position de libération, le ressort 338 correspondant est comprimé, comme illustré par la figure 8 pour le doigt 324 à droite.

Pour amener la tige 340 vers sa position de libération on fait pivoter la poignée 342 depuis la position verticale de la figure 1, soit dans le sens matérialisé par la flèche S1, soit dans le sens opposé matérialisé par la flèche S2. La came 343 entraîne alors la tige 340 vers le haut.

Lorsque la tige 340 est ainsi soulevée vers sa position de libération, les doigts 324, dont les têtes 326 prennent appui sur la base 346 de l'étrier 341, sont également soulevés. Ainsi, les doigts 324 de blocage passent simultanément de leurs positions de blocage à leurs positions de libération.

Les deux lames 338 de rappel des doigts 324 suivent la tige 340 dans ses déplacements entre sa position de blocage et de libération.

Le mécanisme 322 comprend un troisième ressort 338 dont l'extrémité supérieure est fixée par une vis 347 sur une paroi fixe 349 du corps 17 de la console 6 et dont l'extrémité inférieure prend appui sur la base 346 de l'étrier 342 pour rappeler la tige de manoeuvre 340 vers sa position de blocage. Ce troisième ressort 338, indépendant des deux autres ressorts 338, est par exemple également réalisé sous forme d'une lame élastique.

Ce troisième ressort 338 ne suit pas l'étrier 341 dans ses déplacements. Ce ressort 338 est comprimé lorsque la tige 340 est en position de libération comme illustré par la figure 7.

### Fonctionnement des moyens de blocage longitudinal de la console

Pour placer la console 6 dans une position longitudinale souhaitée, on commande grâce à la poignée 342 la tige 340 pour qu'elle occupe sa position de libération. On déplace ensuite la console 6 le long des rails 8, puis la tige 340 est ramenée, par exemple sous l'action du troisième ressort 338, vers sa position de blocage, jusqu'à ce que les deux doigts 324 occupent leurs positions de blocage des figures 5 et 6.

Si le véhicule subit un choc lorsque les doigts 324 sont en positions de blocage, c'est à dire simultanément engagés dans un même logement 320, la console 6 est fermement bloquée en translation par rapport aux rails 8. Les risques de blessure d'un occupant sont donc limités.

Si, lorsqu'un tel choc survient, les doigts 324 ne sont pas engagés dans un logement 320 mais prennent par exemple appui vers le bas sur le rail 8 gauche entre deux logements 320 successifs sous l'action des ressorts 338 qui sont comprimés, le comportement de l'ensemble 1 de console est le suivant.

Comme matérialisé par la flèche 350 sur la figure 8, la console 6 va subir une accélération par rapport aux rails 8. Dans l'exemple représenté, cette accélération est orientée vers l'avant, ce qui correspond par exemple à une percussion frontale d'un obstacle par le véhicule.

La console 6 va commencer à coulisser par rapport aux rails 8 vers l'avant. Au cours de ce coulissement, les ressorts 338 continuent à pousser les doigts 324 contre le rail 8 gauche.

Dès que le doigt 324 avant se situe en regard d'un logement 320, le ressort 338 correspondant va pousser l'extrémité inférieure 328 du doigt 324 dans le logement 320. Chaque logement 320 possédant une étendue longitudinale E supérieure à celle e d'un doigt 324, le doigt avant 324 a le temps de pénétrer dans le logement 320 même si la vitesse de coulissement atteinte est importante.

Le coulissement relatif entre la console 6 et la base 4 sera alors interrompu par appui du doigt 324 avant contre le bord avant 332 du logement 320.

Ainsi, les risques de blessure d'un occupant du véhicule sont limités.

De manière analogue, en cas de choc provoquant un déplacement vers l'arrière de la console 6 par rapport aux rails 8, le doigt 324 arrière aura le temps de pénétrer dans un logement 320 pour bloquer la translation relative entre la console 6 et les rails 8.

Ainsi, les moyens 300 de blocage permettent de limiter les risques de blessure d'un occupant du véhicule par la console 12 en cas de choc subi par le véhicule automobile.

Pour autant, les moyens 300 de blocage, qui ne possèdent que deux doigts 324, ont un encombrement réduit.

On notera que ces avantages peuvent être obtenus grâce à des moyens 300 de blocage possédant un seul doigt 324 et des logements 320 d'étendue supérieure à celle du doigt.

Les caractéristiques relatives à l'utilisation de plusieurs doigts 324 pour assurer un blocage longitudinal sans jeu, à l'utilisation de ressorts 338 de rappel indépendants et d'une tige de manoeuvre 340 commune aux doigts 324 peuvent, dans certaines variantes, ne pas être utilisées.

### Fonctionnement des moyens de liaison et d'extraction de la console

Comme on le voit sur la figure 2, la région 14 extérieure du rail 8 gauche, c'est-à-dire la région 14 gauche, est engagée dans les régions centrales 24 des galets 22 gauches qui ont des formes complémentaires. Ainsi, les galets 22 gauches ne peuvent se déplacer verticalement par rapport au rail 8 gauche.

De même, les galets 22 droits sont bloqués verticalement par rapport au rail 8 droit.

Grâce à la forme complémentaire des rails 8 et des galets 22, la console 6 ne peut donc être extraite du véhicule lorsque les rails 8 sont dans leurs positions de liaison illustrée par les figures 1 et 2.

Pour extraire la console 6, on la place dans sa position extrême reculée, c'est-à-dire sur les tronçons arrière 10 des rails 8. Les figures 2 à 4 correspondent à cette position.

Ensuite, on fait pivoter, grâce aux moyens 110 d'entraînement en rotation et comme matérialisé par la flèche 30 sur la figure 3, les tronçons arrière 10 des rails 8 pour qu'ils occupent leurs positions d'extraction illustrée par la figure 3. Les dégagements .335 permettent au tronçon arrière 10 gauche de pivoter même si les doigts 324 sont engagés dans un logement 320.

Les régions convexes 14 des rails 8 sont alors dégagées des régions centrales 24 des galets 22. On notera que, à l'issue de la rotation des rails 8 et avant extraction de la console 6, la console 6 repose sur les régions convexes 14 supérieures des rails 8 qui sont engagées dans les cavités 28 des baguettes 26.

Les régions convexes 14 et les cavités 28 ayant des formes complémentaires, la console 6 ne peut être déplacée latéralement par rapport aux rails 8.

Ensuite, il suffit de soulever la console 6 par rapport aux rails 8 pour l'extraire, comme matérialisé par la flèche 32 sur la figure 4.

Pour lier à nouveau la console 6 aux rails 8, on procède inversement.

On notera notamment que lors de cette opération de liaison, l'étape intermédiaire illustrée par la figure 3 garantit grâce aux baguettes 26 un positionnement latéral correct de la console 6 par rapport aux rails 8. Ainsi, l'engagement ultérieur des régions convexes 14 des rails 8 dans les régions centrales concaves 24 des galets 22 peut être effectué facilement.

Dans le mode de réalisation décrit ci-dessus, les rails 8 et les galets 22 forment eux-mêmes des moyens libérables 34 de liaison de la console 6 à la base 4. Ainsi, la structure de ces moyens 34 de liaison est relativement simple et leur encombrement est réduit, notamment par comparaison avec les ensembles classiques de console où ces moyens de liaison sont distincts des rails 8 et des galets 22.

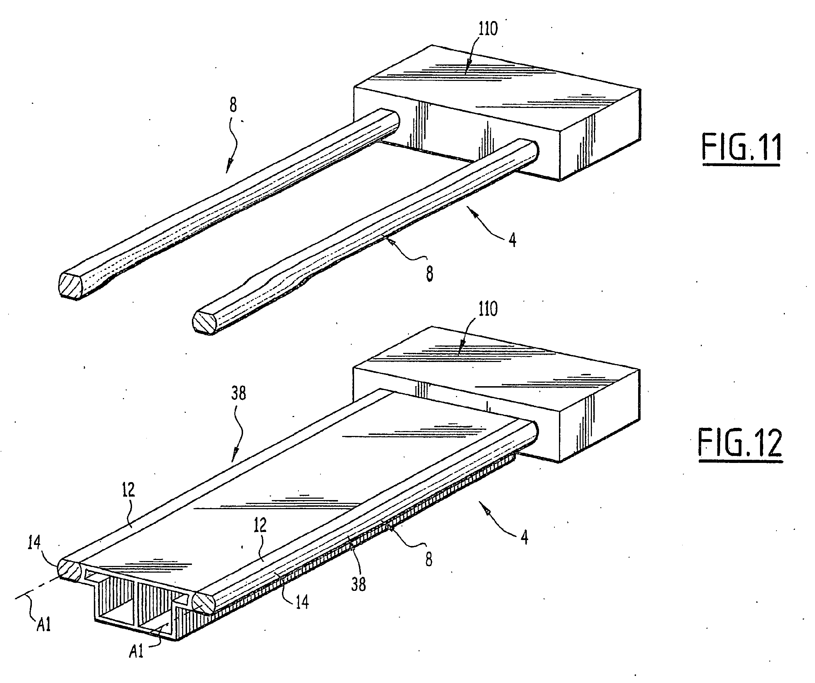

La figure 11 illustre une variante du mode de réalisation des figures 1 à 8. Sur cette figure, la console 6 et les moyens 300 de blocage longitudinal n'ont pas été représentés. Dans cette variante, les rails 8 dans leur ensemble sont mobiles en rotation sous l'action des moyens 110 d'entraînement.

Ainsi, l'extraction de la console 6 peut être assurée dans n'importe quelle position longitudinale de la console 6 et non plus seulement au droit de tronçons 10 des rails qui définissent une région localisée d'extraction, comme dans le mode de réalisation des figures 1 à 10. Dans d'autres variantes non-représentées, seuls des tronçons avant ou intermédiaires des rails peuvent être mobiles.

La figure 12 illustre encore une autre variante, dans laquelle les deux rails 8 ont été remplacés par un rail 8 unique dont les deux bords latéraux 38 ont des formes correspondant à celles des deux rails 8 de la figure 11 afin de fournir des surfaces de roulement pour les galets 22 gauches et droits.

De manière plus générale, on notera que les principes ci-dessus peuvent être appliqués à un ensemble de console dont le ou les rails 8 sont portés par la console 6 et le ou les galets de roulement 22 sont portés par la base 4. Dans ce cas, les baguettes 26, si elles sont présentes, sont prévues sur la base 4. Le nombre de galets peut également être différent de quatre.

Sur les figures 11 et 12, la structure des moyens 110 d'entraînement en rotation des rails et de leurs tronçons n'a pas été détaillée. Elle peut être analogue à celle des figures 1 à 10 ou être différente. En particulier, ces moyens 110 d'entraînement peuvent être automatisés et comprendre un ou plusieurs moteurs électriques d'entraînement.

De manière générale également, la libération et la liaison verticale de la console 6 par rapport à la base 4 peut être assurée non pas par rotation du ou des rails ou d'une partie du ou des rails, mais par rotation d'au moins une partie d'un galet, ou éventuellement par un mouvement autre qu'une rotation.

De manière encore plus générale, des reliefs complémentaires de formes différentes de celles décrites précédemment peuvent être prévus sur les rails et sur les galets afin d'assurer une liaison et une libération verticale de la console 6 et de la base 4.

## Revendications

1. Ensemble (1) de console pour véhicule automobile du type comprenant :
- une base (4) et une console (6) qui comprennent au moins un rail (8) et au moins un galet (22) de roulement sur le rail pour permettre à la console de coulisser par rapport à la base le long d'une direction de coulissement (L),
- des moyens libérables (34) de liaison de la console à la base pour permettre son extraction du véhicule automobile,
- des moyens (300) de blocage de la console par rapport à la base le long de la direction de coulissement,
**caractérisé en ce que** les moyens libérables (34) de liaison comprennent des reliefs complémentaires (14, 24) prévus sur le rail et le galet, **en ce qu'**un premier élément (8) parmi le rail et le galet comprend au moins une partie (10 ; 8 ; 38) mobile entre une position de liaison (figure 2) dans laquelle les reliefs complémentaires (14, 24) sont engagés l'un dans l'autre, et une position d'extraction (figure 3) dans laquelle les reliefs complémentaires (14, 24) sont dégagés l'un de l'autre, **en ce que** les moyens (300) de blocage comprennent au moins un logement (320) et au moins un doigt (324) mobile entre une position de blocage, dans laquelle le doigt est engagé dans le logement, et une position de libération, dans laquelle le doigt est dégagé du logement, et **en ce que** le logement (320) a une étendue (E), le long de la direction de coulissement (L), supérieure à celle du doigt (324).

2. Ensemble selon la revendication 1, **caractérisé en ce que** le premier élément est le rail (8).

3. Ensemble selon la revendication 2, **caractérisé en ce que** la partie mobile est formée par un tronçon (10 ; 38) du rail.

4. Ensemble selon la revendication 2, **caractérisé en ce que** tout le rail (8) est mobile entre la position de liaison et la position d'extraction.

5. Ensemble selon l'une des revendications précédentes, **caractérisé en ce que** le relief (14) du premier élément (8) est convexes.

6. Ensemble selon l'une des revendications précédentes, **caractérisé en ce que** la partie mobile (10 ; 8 ; 38) du premier élément est mobile par rotation autour d'un axe de rotation (A1).

7. Ensemble selon la revendication 6, **caractérisé en ce que** le relief (14) du premier élément (8) a un profil convexe sensiblement en arc de cercle centré sur l'axe de rotation (A1).

8. Ensemble selon l'une des revendications précédentes, **caractérisé en ce que** la console (6) ou la base (4) présente un logement (28) de réception du relief (14) du premier élément (8) lorsque la partie mobile (10 ; 8 ; 38) est en position d'extraction.

9. Ensemble selon la revendication 8, **caractérisé en ce que** le logement (28) a sensiblement une forme complémentaire de celle du relief (14) du premier élément (8) pour retenir la console (6) par rapport à la base (4) latéralement par rapport à la direction de coulissement (L).

10. Ensemble selon l'une des revendications précédentes, **caractérisé en ce que** les moyens (300) de blocage comprennent au moins deux doigts (324) mobiles, chaque doigt étant mobile entre une position de blocage, dans laquelle il est engagé dans le logement (320), et une position de libération, dans laquelle il est dégagé du logement, et **en ce que** les deux doigts (324) peuvent être simultanément en position de blocage et engagés dans le même logement (320).

11. Ensemble selon la revendication 10, **caractérisé en ce qu'**un premier doigt (324) est disposé dans sa position de blocage sensiblement contre une première extrémité (332) du logement (320), et **en ce qu'**un deuxième doigt (324) est disposé dans sa position de blocage sensiblement contre une deuxième extrémité (334) du logement (320) opposée à la première extrémité (332).

12. Ensemble selon l'une des revendications précédentes, **caractérisé en ce qu'**il comprend des moyens (338) de rappel du ou de chaque doigt (324) vers sa position de blocage.

13. Ensemble selon la revendication 10 ou 11 prise en combinaison avec la revendication 12, **caractérisé en ce qu'**il comprend des premiers moyens (338) de rappel d'un premier doigt (324) vers sa position de blocage et des deuxièmes moyens (338) de rappel d'un deuxième doigt (324) vers sa position de blocage, les premiers moyens (338) de rappel étant indépendants des deuxième moyens (338) de rappel.

14. Ensemble selon l'une des revendications précédentes, **caractérisé en ce qu'**il comprend des moyens (340, 341, 342) de manoeuvre du ou de chaque doigt (324) pour l'amener vers sa position de libération.

15. Ensemble selon la revendication 14 prise en combinaison avec l'une des revendications 10, 11 et 13, **caractérisé en ce que** les moyens (340, 341, 342) de manoeuvre sont des moyens communs de manoeuvre pour dégager les doigts (324) simultanément du logement (320).

16. Ensemble selon l'une des revendications précédentes, **caractérisé en ce que** le ou chaque doigt (324) est porté par la console (6) et le ou chaque logement (20) est prévu dans la base (4).

17. Ensemble selon l'une des revendications précédentes, **caractérisé en ce que** les moyens de blocage comprennent plusieurs logements (30) répartis le long de la direction de coulissement (L).

18. Véhicule automobile, **caractérisé en ce qu'**il comprend au moins un ensemble (1) de console selon l'une des revendications précédentes, la base (4) étant solidaire du plancher (2) du véhicule automobile.

## Claims

1. Console assembly (1) for a motor vehicle of the type comprising:
- a base (4) and a console (6) which comprise at least one rail (8) and at least one roller (22) which rolls on the rail in order to allow the console to slide relative to the base along a direction of sliding (L);
- connection means (34) which can be released from the console at the base in order to allow the latter to be extracted from the motor vehicle; and
- means (300) for blocking the console relative to the base along the direction of sliding,
**characterised in that** the connection means (34) which can be released comprise complementary reliefs (14, 24) which are provided on the rail and the roller, **in that** a first element (8) from amongst the rail and the roller comprises at least one part (10; 8; 38) which is mobile between a connection position (figure 2) in which the complementary reliefs (14, 24) are engaged in one another, and a position of extraction (figure 3) in which the complementary reliefs (14, 24) are released from one another, **in that** the blocking means (300) comprise at least one receptacle (320) and at least one finger (324) which is mobile between a blocking position, in which the finger is engaged in the receptacle, and a release position, in which the finger is released from the receptacle, and **in that** the receptacle (320) has an extent (E) along the direction of sliding (L) which is greater than that of the finger (324).

2. Assembly according to claim 1, **characterised in that** the first element is the rail (8).

3. Assembly according to claim 2, **characterised in that** the mobile part is formed by a section (10; 38) of the rail.

4. Assembly according to claim 2, **characterised in that** the entire rail (8) is mobile between the connection position and the extraction position.

5. Assembly according to one of the preceding claims, **characterised in that** the relief (14) of the first element (8) is convex.

6. Assembly according to one of the preceding claims, **characterised in that** the mobile part (10; 8; 38) of the first element is mobile by rotation around an axis of rotation (Al).

7. Assembly according to claim 6, **characterised in that** the relief (14) of the first element (8) has a convex profile which is substantially in an arc of a circle centred on the axis of rotation (A1).

8. Assembly according to one of the preceding claims, **characterised in that** the console (6) or the base (4) has a receptacle (28) for receipt of the relief (14) of the first element (8) when the mobile part (10; 8; 38) is in the extraction position.

9. Assembly according to claim 8, **characterised in that** the receptacle (28) has a form which is substantially complementary to that of the relief (14) of the first element (8), in order to retain the console (6) relative to the base (4) laterally in relation to the direction of sliding (L).

10. Assembly according to one of the preceding claims, **characterised in that** the blocking means (300) comprise at least two mobile fingers (324), each finger being mobile between a blocking position in which it is engaged in the receptacle (320), and a release position in which it is released from the receptacle, and **in that** the two fingers (324) can be simultaneously in the blocking position and engaged in the same receptacle (320).

11. Assembly according to claim 10, **characterised in that** a first finger (324) is disposed in its blocking position substantially against a first end (332) of the receptacle (320), and **in that** a second finger (324) is disposed in its blocking position substantially against a second end (334) of the receptacle (320), opposite the first end (332).

12. Assembly according to one of the preceding claims, **characterised in that** it comprises means (338) for return of the or each finger (324) towards its blocking position.

13. Assembly according to claim 10 or 11 taken in combination with claim 12, **characterised in that** it comprises first means (338) for return of a first finger (324) towards its blocking position, and second means (338) for return of a second finger (324) towards its blocking position, the first return means (338) being independent from the second return means (338).

14. Assembly according to one of the preceding claims, **characterised in that** it comprises means (340, 341, 342) for manoeuvring the or each finger (324) in order to bring it towards its release position.

15. Assembly according to claim 14 taken in combination with one of claims 10, 11 and 13, **characterised in that** the manoeuvring means (340, 341, 342) are common manoeuvring means for releasing the fingers (324) simultaneously from the receptacle (320).

16. Assembly according to one of the preceding claims, **characterised in that** the or each finger (324) is supported by the console (6) and the or each receptacle (20) is provided in the base (4).

17. Assembly according to one of the preceding claims, **characterised in that** the blocking means comprise a plurality of receptacles (30) which are distributed along the direction of sliding (L).

18. Motor vehicle, **characterised in that** it comprises at least one console assembly (1) according to one of the preceding claims, the base (4) being integral with the floor (2) of the motor vehicle.

## Patentansprüche

1. Kraftfahrzeug-Konsolenanordnung (1) des Typs, der umfasst:
- eine Basis (4) und eine Konsole (6), die wenigstens eine Schiene (8) und wenigstens eine Rolle (22) zum Rollen auf der Schiene umfassen, um der Konsole zu ermöglichen, in Bezug auf die Basis in einer Gleitrichtung (L) zu gleiten,
- lösbare Mittel (34) für die Verbindung der Konsole mit der Basis, um sie aus dem Kraftfahrzeug zu entnehmen,
- Mittel (300) zum Blockieren der Konsole in Bezug auf die Basis in Gleitrichtung,
**dadurch gekennzeichnet, dass** die lösbaren Verbindungsmittel (34) komplementäre Reliefs (14, 24) aufweisen, die an der Schiene bzw. an der Rolle vorgesehen sind, dass ein erstes Element (8) aus der die Schiene und die Rolle enthaltenden Gruppe wenigstens ein Teil (10; 8; 38), das zwischen einer Verbindungsposition (Fig. 2), in der die komplementären Reliefs (14, 24) miteinander in Eingriff sind, und einer Entnahmeposition (Fig. 3), in der die komplementären Reliefs (14, 24) voneinander gelöst sind, beweglich ist, enthält, dass die Blockiermittel (300) wenigstens einen Aufnahmesitz (320) und wenigstens einen Finger (324), der zwischen einer Blockierposition, in der der Finger in dem Aufnahmesitz in Eingriff ist, und einer Freigabeposition, in der der Finger von dem Aufnahmesitz freigegeben ist, beweglich ist, enthalten und dass der Aufnahmesitz (320) eine Ausdehnung (E) in Gleitrichtung (L) hat, die größer als jene des Fingers (324) ist.

2. Anordnung nach Anspruch 1, **dadurch gekennzeichnet, dass** das erste Element die Schiene (8) ist.

3. Anordnung nach Anspruch 2, **dadurch gekennzeichnet, dass** das bewegliche Teil durch ein Teilstück (10; 38) der Schiene gebildet ist.

4. Anordnung nach Anspruch 2, **dadurch gekennzeichnet, dass** die gesamte Schiene (8) zwischen der Verbindungsposition und der Entnahmeposition beweglich ist.

5. Anordnung nach einem der vorhergehenden Ansprüche, **dadurch gekennzeichnet, dass** das Relief (14) des ersten Elements (8) konvex ist.

6. Anordnung nach einem der vorhergehenden Ansprüche, **dadurch gekennzeichnet, dass** das bewegliche Teil (10; 8; 38) des ersten Elements um eine Drehachse (A1) rotatorisch beweglich ist.

7. Anordnung nach Anspruch 6, **dadurch gekennzeichnet, dass** das Relief (14) des ersten Elements (8) ein im Wesentlichen kreisbogenförmiges konvexes Profil hat, das auf die Drehachse (A1) zentriert ist.

8. Anordnung nach einem der vorhergehenden Ansprüche, **dadurch gekennzeichnet, dass** die Konsole (6) oder die Basis (4) einen Aufnahmesitz (28) aufweist, um das Relief (14) des ersten Elements (8) aufzunehmen, wenn das bewegliche Teil (10; 8; 38) in der Entnahmeposition ist.

9. Anordnung nach Anspruch 8, **dadurch gekennzeichnet, dass** der Aufnahmesitz (28) im Wesentlichen eine Form hat, die zu jener des Reliefs (14) des ersten Elements (8) komplementär ist, um die Konsole (8) in Bezug auf die Basis (4) seitlich in Bezug auf die Gleitrichtung (L) festzuhalten.

10. Anordnung nach einem der vorhergehenden Ansprüche, **dadurch gekennzeichnet, dass** die Blockiermittel (300) wenigstens zwei bewegliche Finger (324) aufweisen, wobei jeder Finger zwischen einer Blockierposition, in der er in dem Aufnahmesitz (320) in Eingriff ist, und einer Freigabeposition, in der er von dem Aufnahmesitz freigegeben ist, beweglich ist, und dass die zwei Finger (324) in der Blockierposition und in demselben Aufnahmesitz (320) gleichzeitig in Eingriff sein können.

11. Anordnung nach Anspruch 10, **dadurch gekennzeichnet, dass** ein erster Finger (324) in seiner Blockierposition im Wesentlichen anliegend an einem ersten Ende (332) des Aufnahmesitzes (320) angeordnet ist und dass ein zwciter Finger (324) in seiner Blockierposition im Wesentlichen anliegend an einem zweiten Ende (334) des Aufnahmesitzes (320), das zu dem ersten Ende (332) entgegengesetzt ist, angeordnet ist.

12. Anordnung nach einem der vorhergehenden Ansprüche, **dadurch gekennzeichnet, dass** sie Mittel (338) zum Zurückstellen des oder jedes Fingers (324) in seine Blockierposition umfasst.

13. Anordnung nach Anspruch 10 oder 11, in Kombination mit Anspruch 12, **dadurch gekennzeichnet, dass** sie erste Mittel (338) für das Zurückstellen eines ersten Fingers (324) in seine Blockierposition und zweite Mittel (338) für das Zurückstellen eines zweiten Fingers (324) in seine Blockierposition umfasst, wobei die ersten Rückstellmittel (338) von den zweiten Rückstellmitteln (338) unabhängig sind.

14. Anordnung nach einem der vorhergehenden Ansprüche, **dadurch gekennzeichnet, dass** sie Mittel (340, 341, 342) zum Betätigen des oder jedes Fingers (324) umfasst, um ihn in seine Freigabeposition zu bringen.

15. Anordnung nach Anspruch 14 in Kombination mit einem der Ansprüche 10, 11 und 13, **dadurch gekennzeichnet, dass** die Betätigungsmittel (340, 341, 342) gemeinsame Betätigungsmittel sind, um die Finger (324) von dem Aufnahmesitz (320) gleichzeitig freizugeben.

16. Anordnung nach einem der vorhergehenden Ansprüche, **dadurch gekennzeichnet, dass** der oder jeder Finger (324) von der Konsole (6) getragen wird und der oder jeder Aufnahmesitz (20) in der Basis (4) vorgesehen ist.

17. Anordnung nach einem der vorhergehenden Ansprüche, **dadurch gekennzeichnet, dass** die Blockiermittel mehrere Aufnahmesitze (30) umfassen, die in Gleitrichtung (L) verteilt sind.

18. Kraftfahrzeug, **dadurch gekennzeichnet, dass** es wenigstens eine Konsolenanordnung (1) nach einem der vorhergehenden Ansprüche umfasst, wobei die Basis (4) mit dem Boden (2) des Kraftfahrzeugs fest verbunden ist.
